Europäisches Patentamt

European Patent Office

Office européen des brevets

(19)

(11) Veröffentlichungsnummer : **0 121 807**
**B1**

(12)
# EUROPÄISCHE PATENTSCHRIFT

(45) Veröffentlichungstag der Patentschrift :
23.12.87

(51) Int. Cl.⁴ : **F 02 B 43/00**, F 02 D 19/02

(21) Anmeldenummer : **84102714.7**

(22) Anmeldetag : **13.03.84**

(54) Vorrichtung zur Einblasung von Flüssiggas.

(30) Priorität : **09.04.83 DE 3312760**

(43) Veröffentlichungstag der Anmeldung :
**17.10.84 Patentblatt 84/42**

(45) Bekanntmachung des Hinweises auf die Patenterteilung : **23.12.87 Patentblatt 87/52**

(84) Benannte Vertragsstaaten :
**DE FR GB IT NL**

(56) Entgegenhaltungen :
**EP-A- 0 084 175**
**EP-A- 0 086 348**
**FR-A- 2 315 004**
**GB-A- 2 113 304**
**US-A- 4 436 110**

(73) Patentinhaber : **ROBERT BOSCH GMBH**
**Postfach 50**
**D-7000 Stuttgart 1 (DE)**

(72) Erfinder : **Rijkeboer, Rudolf Coenraad**
**Tollenskade 39**
**NL-2274 LV Voorburg (NL)**

## Beschreibung

### Stand der Technik

Die Erfindung geht aus von einer Vorrichtung zur Einblasung von Flüssiggas nach der Gattung des Hauptanspruchs. Es ist schon eine Vorrichtung zur Einblasung von Flüssiggas vorgeschlagen worden (EP-A-0 084 175) (Dokument gemäß Art. 54 (3) des EPÜ), bei der jedoch ein unerwünschter Einfluß des Saugrohrdruckes stromabwärts der Droselklappe auf das geregelte Flüssiggas-Luft-Gemischverhältnis besteht. Bei einer weiteren vorgeschlagenen Vorrichtung zur Versorgung einer Brennkraftmaschine mit Flüssiggas (EP-A-0 086 348) (Dokument gemäß Art. 54 (3) des EPÜ) ist kein Verdampfer-Druckregelventil vorgesehen, sondern das Flüssiggas wird in flüssigem Zustand dem Zumeßventil zugeführt.

Vorgeschlagen wurde ebenfalls eine Vorrichtung (EP-A-0 122 455, gleiche Priorität wie der Anmeldungsgegenstand), bei der die Beeinflussung des Flüssiggas-Luft-Gemischverhältnisses nicht durch Änderung der Rückstellkraft auf das Luftmeßorgan erfolgt, sondern über das Verdampfer-Druckregelventil.

### Vorteile der Erfindung

Die erfindungsgemäße Vorrichtung mit den kennzeichnenden Merkmalen des Hauptanspruchs hat demgegenüber den Vorteil, daß unabhängig von den sich ändernden Saugrohrdrücken stromabwärts der Drosselklappe ein Flüssiggas-Luft-Gemischverhältnis einregelbar ist, das an die Betriebskenngrößen der Brennkraftmaschine angepaßt werden kann.

### Zeichnung

Ausführungsbeispiele der Erfindung sind in der Zeichnung vereinfacht dargestellt und in der nachfolgenden Beschreibung näher erläutert. Es zeigen Figur 1 eine Einspritzanlage für Flüssiggas mit einem ersten Ausführungsbeispiel eines Steuerdruckregelventiles, Figur 2 ein zweites Ausführungsbeispiel eines Steuerdruckregelventiles, Figur 3 ein drittes Ausführungsbeispiel eines Steuerdruckregelventiles, Figur 4 ein viertes Ausführungsbeispiel eines Steuerdruckregelventiles.

### Beschreibung der Ausführungsbeispiele

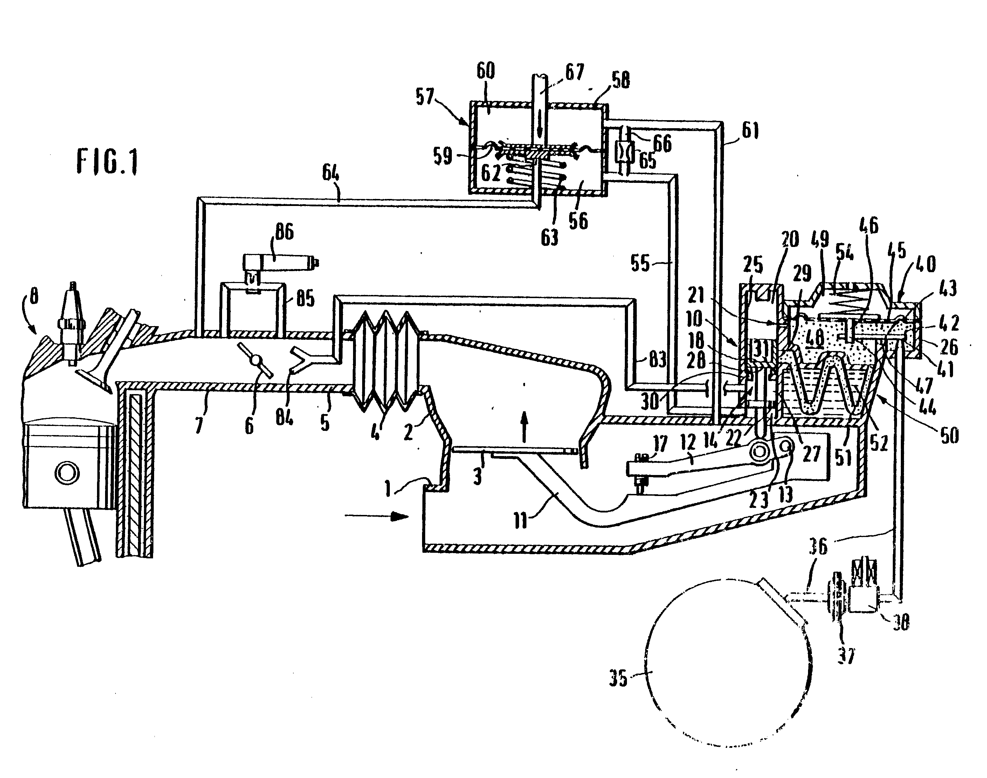

Bei der in Figur 1 dargestellten Einspritzanlage für Flüssiggas (LPG) strömt die Verbrennungsluft stromabwärts eines nicht dargestellten Luftfilters in Pfeilrichtung über einen Saugrohrabschnitt 1 in einen konischen Abschnitt 2, in dem ein Luftmeßorgan 3 angeordnet ist und weiterhin durch einen elastisch verformbaren Abschnitt 4 und einen Abschnitt 5 über eine Drosselklappe 6 zu einem Saugrohrabschnitt 7 und von dort zu einem oder mehreren Zylindern 8 einer Brennkraftmaschine, beispielsweise einer gemischverdichtenden fremdgezündeten oder einer selbstzündenden Brennkraftmaschine. Das Luftmeßorgan 3 ist beispielsweise eine quer zur Strömungsrichtung angeordnete Stauklappe 3, die sich im konischen Abschnitt 2 des Saugrohres beispielsweise nach einer annähernd linearen Funktion der durch das Saugrohr strömenden Luftmenge bewegt, wobei durch eine konstante am Luftmeßorgan 3 angreifende Rückstellkraft sowie einen konstanten vor dem Luftmeßorgan 3 herrschenden Luftdruck der zwischen dem Luftmeßorgan 3 und der Drosselklappe 6 herrschende Druck ebenfalls konstant bleibt. Das Luftmeßorgan 3 steuert ein Zumeßventil 10. Zur Übertragung der Stellbewegung des Luftmeßorgans 3 dient ein mit ihm verbundener Schwenkhebel 11, der gemeinsam mit einem Korrekturhebel 12 an einem Drehpunkt 13 gelagert ist und bei seiner Schwenkbewegung ein als Zumeßkolben 14 ausgebildetes bewegliches Ventilteil des Zumeßventils 10 betätigt. An einer Gemischregulierschraube 17 zwischen Schwenkhebel 11 und Korrekturhebel 12 läßt sich das gewünschte Kraftstoff-Luft-Gemisch korrigieren. Das dem Schwenkhebel 11 abgewandte Ende 18 des Zumeßkolbens 14 ragt in einen Druckraum 20, der vorzugsweise über eine drosselnde Stichleitung 21 mit einem Verdampferraum 48 eines Verdampfer-Druckregelventils 40 verbunden ist. Dem Schwenkhebel 11 zugewandt hat der Zumeßkolbens 14 eine Steuerfläche 22, die einerseits einen Steuerraum 23 begrenzt.

Der Zumeßkolben 14 ist in einer Führungsbohrung 25 des Zumeß- und Verdampfergehäuses 26 gleitbar gelagert und ist mit einer Ringnut 27 versehen. Dem Schwenkhebel 11 abgewandt wird die Ringnut 27 durch eine axiale Begrenzungsfläche 28 begrenzt, die bei einer axialen Bewegung des Zumeßkolbens 14 eine in der Wandung der Führungsbohrung 25 ausgebildete Zumeßöffnung 29, beispielsweise in Form eines Schlitzes, mehr oder weniger zur Ringnut 27 hin öffnet. In die Ringnut 27 ragt eine Ringschulter 30 der Führungsbohrung 25, an der der Begrenzungsfläche 28 zugewandt ein Dichtring 31 anliegt, gegen den bei nicht strömender Luft im Abstellfall der Brennkraftmaschine die Begrenzungsfläche 28 des Zumeßkolbens 14 dichtend gepreßt wird.

Die Kraftstoffversorgung der Einspritzanlage erfolgt aus einem Flüssiggastank 35, der als ein speziell konstruierter Druckbehälter gestaltet ist und der Flüssiggas in gefülltem Zustand unter einem Druck von ca. 15 bis 20 bar aufnimmt. Eine Versorgungsleitung 36 führt vom Flüssiggastank 35 über einen Filter 37 und ein Unterbrecherventil 38, das bei abgeschalteter Anlage die Versorgungsleitung 36 schließt, zu dem Verdampfer-Druckregelventil 40. Die Versorgungsleitung 36 endet im Verdampfer-Druckregelventil 40 in einer Regeldüse 41, mit der beispielsweise das eine als bewegliches Ventilteil dienende Ende 42 eines zweiarmigen Hebels 43 derart zusammenarbeitet, daß der Ausströmquerschnitt der Regeldüse 41 mehr oder weniger geöffnet wird. An dem anderen Ende 44 des Hebels 43 greift eine als nachgiebige Wandung im Verdampfer-Druckregelventil 40 vorgesehene Verdampfermembran 45 über einen Betätigungsstift 46 an. Der Hebel 43 ist um einen Auflagerpunkt 47 schwenkbar. Die Verdampfermembran 45 trennt einen Verdampferraum 48 von einem Raum 49. Der Verdampferraum 48 nimmt die Regeldüse 41, den Hebel 43 und das aus der Regeldüse 41 austretende Flüssiggas auf, das im Verdampferraum verdampft sowie auf einen bestimmten Druck entspannt wird und über eine durch einen Wärmetauscher 50 führende Speiseleitung 51 zur Zumeßöffnung 29 strömen kann. Durch den Wärmetauscher 50 kann beispielsweise das Kühlwasser 52 der Brennkraftmaschine strömen.

In dem Raum 49 des Verdampfer-Druckregelventiles 40 ist eine Druckfeder 54 angeordnet, die sich an der Verdampfermembran 45 derart abstützt, daß sie bestrebt ist, das Ende 42 des Hebels 43 von der Regeldüse 41 abzuheben und damit eine größere Flüssiggasmenge austreten zu lassen. Der Raum 49 des Verdampfer-Druckregelventils 40 steht mit der Atmosphäre in Verbindung.

Von dem Steuerraum 23 am Zumeßkolben 14 führt eine Steuerdruckleitung 55 zu einer Steuerdruckkammer 56 eines Steuerdruckregelventiles 57. Das Steuerdruckregelventil 57 weist ein Gehäuse 58 auf, das durch eine als bewegliches Ventilteil dienende Membran 59, die an ihrem Umfang eingespannt ist, in die Steuerdruckkammer 56 und eine Hochdruckkammer 60 geteilt wird. Die Hochdruckkammer 60 steht über eine Hochdruckleitung 61 mit dem Saugrohrabschnitt 1 stromaufwärts des Luftmeßorgans 3 in Verbindung. Die Membran 59 arbeitet mit einem festen Ventilsitzt 62 zusammen und wird durch eine ebenfalls in der Steuerdruckkammer 56 angeordnete Regelfeder 63 in Öffnungsrichtung des Steuerdruckregelventiles beaufschlagt. Von dem Ventilsitz 62 führt eine Unterdruckleitung 64 zum Saugrohrabschnitt 7 stromabwärts der Drosselklappe 6. Hochdruckleitung 61 und Steuerdruckleitung 55 sind über eine Drosselstelle 65 miteinander verbunden, die beispielsweise in einer Verbindungsleitung 66 oder, wie nicht dargestellt ist, in der Membran 50 angeordnet sein kann. Mittels eines in die Hochdruckkammer 60 ragenden Betätigungsgleides 67 kann eine von Betriebskenngrößen der Brennkraftmaschine wie Temperatur, Drehzahl, Drosselklappenstellung, Abgaszusammensetzung und anderen abhängige Korrekturkraft in Schließrichtung des Steuerdruckregelventiles 57 an der Membran 59 angreifen. Durch Druckteilung zwischen der festen Drossel 65 und dem eine veränderliche Dressel darstellenden Steuerdruckregelventil 57 wird in der Steuerdruckleitung 55 und damit in dem Steuerraum 23 am Zumeßkolben 14 ein von der Kraft der Regelfeder 63 vorbestimmter konstanter Steuerdruck der als pneumatisches Gegendruckmedium dienenden Steuerluft geregelt, dessen Wert durch Eingriff über das Betätigungsglied 67 korrigierbar ist. Der in dem Steuerraum 23 am Zumeßkolben 14 herrschende Steuerdruck beeinflußt die Verstellkraft am Zumeßkolben 14 und damit die Stellung des Zumeßkolbens 14 gegenüber der Zumeßöffnung 29, die neben dem im Verdampferraum 48 herrschenden Druck des verdampften Flüssiggases, der stromaufwärts der Zumeßöffnung 29 des Zumeßventils herrscht, die zugemessene Flüssiggasmenge und damit das der Brennkraftmaschine zugeführte Flüssiggas-Luft-Gemischverhältnis bestimmt. Wird die Brennkraftmaschine im Bereich der Vollast betrieben, so öffnet die Drosselklappe 6 nahezu den Saugrohrquerschnitt und der Saugrohrdruck stromabwärts der Drosselklappe 6 steigt über den durch die Regelfeder 63 am Steuerdruckregelventil 57 geregelten Steuerdruck, so daß dieser nun ebenfalls ansteigt, was zur Erzielung eines reicheren Kraftstoff-Luft-Gemisches während des Vollastbetriebes der Brennkraftmaschine erwünscht sein kann. Es kann auch erwünscht sein, daß bei einem Betrieb der Brennkraftmaschine nahe Vollast mit dem Erreichen des durch die Regelfeder 63 bestimmten Steuerdruckes des Steuerdruckregelventiles 57 das Steuerdruckregelventil durch eine über das Betätigungsglied 67 angreifende Kraft geschlossen wird, so daß der stromaufwärts des Luftmeßorgans 3 herrschende Luftdruck über die Hochdruckleitung 61 und die Drosselstelle 65 direkt im Steuerraum 23 wirksam wird und zu einer Vergrößerung der Verstellkraft auf den Zumeßkolben 14 in Richtung zum Druckraum 20 und damit einer Anreicherung des Kraftstoff-Luft-Gemisches führt.

Die Wirkungsweise der Anlage ist folgende :

Beim Start der Brennkraftmaschine wird das Unterbrecherventil 38 geöffnet und das Flüssiggas strömt über die Versorgungsleitung 36 zur Regeldüse 41 des Verdampfer-Druckregelventiles 40, durch das ein konstanter, jedoch in Abhängigkeit vom Atmosphärendruck änderbarer Druck des verdampften Flüssiggases einregelbar ist. Das im Verdampferraum 48 verdampfte Flüssiggas durchströmt über die Speiseleitung 51 den Wärmetauscher 50 und wird durch das noch eine niedrige Temperatur aufweisende Kühlwasser, dem die erforderliche Verdampfungswärme entzogen wird, gekühlt, so daß das Gas eine höhere Dichte aufweist, als bei wämerem Kühlwasser nach dem Abschluß der Warmlaufphase der Brennkraftmaschine. Diese höhere Dichte führt zu einer größeren zugemessenen Gasmenge am Zumeßventil 10 und damit zu einer Anreicherung des der Brennkraftmaschine zugeführten Gemisches. Mit dem Start saugt die Brennkraftmaschine über das Saugrohr 1 Luft an, durch die das Meßorgan 3 eine gewisse Auslenkung aus seiner Ruhelage erfährt. Entsprechend der Auslenkung des Meßorgans 3 wird über den Hebel 11 auch der Zumeßkolben 14 verschoben, dessen Begrenzungsfläche 28 entsprechend der Stellung des Zumeßkolbens 14 mehr oder weniger die Zumeßöffnung 29 zur Ringnut 27 hin öffnet, so daß in Abhängigkeit von der durch das Luftmeßorgan 3 ermittelten angesaugten Luftmenge eine entsprechende Gasmenge am Zumeßventil 10 zugemessen wird, die über eine mit der Ringnut 27 des Zumeßkolbens 14 in Verbindung stehende Einblaseleitung 83 beispielsweise zum Saugrohrabschnitt 5 geführt und über eine oder mehrere Düsen 84 stromaufwärts der Drosselklappe 6 in den Saugrohrabschnitt 5 eingeblasen wird. Zur Steuerung einer größeren Gemischmenge während des Warmlaufes der Brennkraftmaschine ist am Saugrohr 5, 7 ein die Drosselklappe 6 umgehender Bypass 85 vorgesehen, dessen Querschnitt während der Warmlaufphase der Brennkraftmaschine in bekannter Weise durch ein Zusatzgemischventil 86 temperaturabhängig gesteuert wird.

Die direkte Verbindung zwischen Meßorgan 3 und Zumeßkolben 14 bewirkt ein bestimmtes Verhältnis zwischen angesaugter Luftmenge und zugemessener Gasmenge. Wird aufgrund bestimmter Betriebsbedingungen beispielsweise eine Anreicherung des der Brennkraftmaschine zugeführten Gas-Luft-Gemisches gewünscht, kann durch das Steuerdruckregelventil 57 in dem Steuerraum 23 am Zumeßkolben 14 ein relativ höherer Druck gesteuert werden, der zu einer größeren Öffnung der Zumeßöffnung 29 führt, wordurch infolge des größeren geöffneten Zumeßquerschnittes durch das Zumeßventil 10 eine größere Gasmenge zugemessen und über die Düse 84 eingeblasen wird.

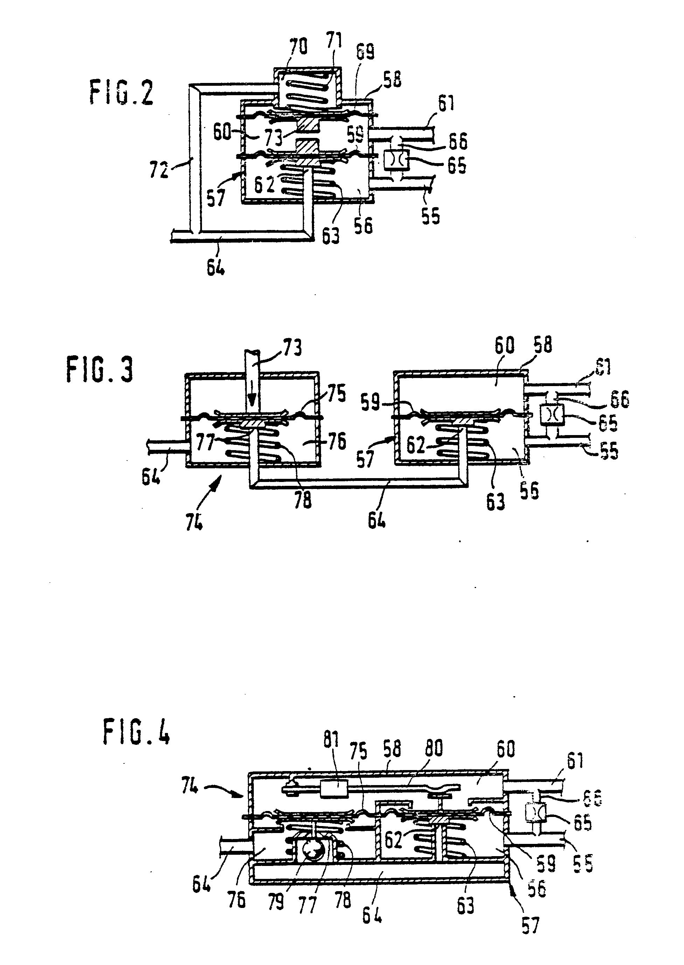

Bei dem in Figur 2 dargestellten zweiten Ausführungsbeispiel eines Steuerdruckregelventils 57 sind die gleichwirkenden Teile durch die gleichen Bezugszeichen gekennzeichnet, wie bei dem ersten Ausführungsbeispiel nach Figur 1. Dabei wird die Hochdruckkammer 60 der Membran 59 abgewandt durch eine nachgiebige Schaltmembran 69 von einer Unterdruckkammer 70 getrennt, in der eine an der Schaltmembran 69 angreifende Druckfeder 71 angeordnet und die mit der Unterdruckleitung 64 nach stromabwärts der Drosselklappe 6 über eine Koppelleitung 72 verbunden ist. Oberhalb eines durch die Kraft der Druckfeder 71 vorbestimmten Saugrohrdruckes in der Nähe des Vollastbetriebes der Brennkraftmaschine wird die Schaltmembran 69 so weit in Richtung zur Membran 59 bewegt, daß sie über einen Angriffskörper 73 an der Membran 59 angreift und diese gegen den Ventilsitz 62 preßt, so daß das Steuerdruckregelventil 57 geschlossen wird, wodurch wie bereits oben ausgeführt im Steuerraum 23 am Zumeßkolben 14 der Druck in der Hochdruckleitung 61 zur Wirkung kommt.

Bei dem Ausführungsbeispiel nach Figur 3 sind ebenfalls die gleichwirkenden Teile durch die gleichen. Bezugszeichen gekennzeichnet. Hierbei ist in der Unterdruckleitung 64 stromabwärts des Steuerdruckregelventils 57 ein Absperrventil 74 angeordnet, das eine als nachgiebige Wand ausgebildete Absperrmembran 75 aufweist, in der in einer Federkammer 76 ein Ventilsitz 77 und eine in Öffnungsrichtung wirkende Feder 78 angeordnet ist. An der Absperrmembran 75 kann ein Angriffskörper 73 angreifen, der bei einem vorbestimmten Saugrohrdruck stromabwärts der Drosselklappe 6 in der Nähe des Vollastbetriebes der Brennkraftmaschine die Absperrmembran 75 gegen den Ventilsitz 77 preßt, so daß die über den Ventilsitz 77 geleitete Unterdruckleitung 64 und damit das Absperrventil 74 geschlossen wird und in dem Steuerraum 23 am Zumeßkolben 14 wie bereits oben ausgeführt nur noch der Druck in der Hochdruckleitung 61 herrscht.

Bei dem in Figur 4 dargestellten Ausführungsbeispiel sind die gegenüber den vorherigen Ausführungsbeispielen gleichwirkenden Teile durch die gleichen Bezugszeichen gekennzeichnet. Dabei ist die Membran 59 des Steuerdruckregelventiles 57 und die Absperrmembran 75 des Absperrventils 74 so in einem gemeinsamen Gehäuse 58 ausgespannt, daß sie einerseits die Hochdruckkammer 60 begrenzen. Stromabwärts des Ventilsitzes 62 ist die Unterdruckleitung 64 über den Ventilsitz 77 des Absperrventils 74 geleitet, in den ein Schließkörper 79 ragt, der andererseits mit der Absperrmenbran 75 verbunden ist und in Schließrichtung durch die sich an der Absperrmembran 75 abstützende Feder 78 bewegbar ist. Wird die Differenz der Drücke in der Hochdruckkammer 60 und der Federkammer 76 kleiner als eine durch die Kraft der Feder 78 vorbestimmte Differenz, was in der Nähe des Vollastbetriebes der Brennkraftmaschine der Fall ist, so zieht die Absperrmembran 75 den Schließkörper 79 gegen den Ventilsitz 77, und das Absperrventil 74 wird geschlossen, wodurch wie oben ausgeführt in dem Steuerraum 23 der·Druck in der Hochdruckleitung 61 wirksam wird. Ist während der Warmlaufphase der Brennkraftmaschine eine verstärkte Anreicherung des der Brennkraftmaschine zugeführten Flüssiggas-Luft-Gemisches erwünscht, so kann im Steuerdruckregelventil 57 eine Bimetallfeder 80 angeordnet sein, die an der Membran 59 derart angreift, daß das Steuerdruckregelventil 57 mehr geschlossen wird, so daß sich der in der Steuerdruckkammer 56 geregelte Steuerdruck und damit ebenfalls der Steuerdruck im Steuerraum 23 am Zumeßkolben 14 erhöht. Nach Ablauf der Warmlaufphase der Brennkraftmaschine bzw. der Aufheizung der Bimetallfeder 80 durch einen elektrischen Heizkörper 81 biegt sich die Bimetallfeder 80 so weit in Richtung von der Membran 59 weg, daß sie keine Wirkung mehr auf die Membran 59 ausübt.

**Patentansprüche**

1. Vorrichtung zur Einblasung von Flüssiggas in das Saugrohr (5) einer Brennkraftmaschine (8) mit einem Verdampfer-Druck-regelventil (40), das eine nachgiebige Wand (45) aufweist, durch die ein bewegliches Ventilteil (42) des Verdampfer-Druckregelventiles (40) betätigbar ist und an der einerseits der Druck des verdampften Flüssiggases und andererseits in einem mit der Atmosphäre verbundenen Raum (49) eine Druckfeder (54) angreift und mit einem stromabwärts des Verdampfer-Druckregelventiles (40) angeordneten Zumeßventil (10), dessen als Zumeßkolben (14) ausgebildetes bewegliches Ventilteil durch ein den Luftdurchsatz im Saugrohr (1, 2) stromaufwärts einer Drosselklappe (6) messendes Luftmeßorgan (3) betätigt mehr oder weniger einen Zumeßquerschnitt (29) für den gasförmigen Kraftstoff zur zum Saugrohr (5) führenden Einblaseleitung (83) öffnet und einerseits von dem Druck des verdampften Flüssiggases im Verdampfer-Druckregelventil (40) und andererseits vom Luftmeßorgan (3) und einem pneumatischen Gegendruckmedium beaufschlagbar ist, dadurch gekennzeichnet, daß der Zumeßkolben (14) dem Luftmeßorgan (3) zugewandt eine Steuerfläche (22) hat, die einerseits einen mit einer Steuerdruckleitung (55) verbundenen Steuerraum (23) begrenzt, in dem der durch ein Steuerdruckregelventil (57) in der Steuerdruckleitung (55) geregelte Druck einer als pneumatisches Gegendruckmedium dienenden Steuerluft wirkt und das bewegliche Ventilteil (59) des Steuerdruckregelventiles (57) einen in einer mit der Steuerdruckleitung (55) verbundenen Steuerdruckkammer (56) angeordneten Ventilsitz (62) mehr oder weniger öffnet, von dem eine Unterdruckleitung (64) zum Saugrohr (7) stromabwärts der Drosselklappe (6) führt und daß die Steuerdruckkammer (56), in der eine das bewegliche Ventilteil (59) in Öffnungsrichtung des Steuerdruckregelventiles (57) beaufschlagende Regelfeder (63) angeordnet ist, von einer über eine Hochdruckleitung (61) mit dem Saugrohr (1) stromaufwärts des Luftmeßorgans (3) in Verbindung stehenden Hochdruckkammer (60) trennt, wobei die Hochdruckleitung (61) und die Steuerdruckleitung (55) über eine Drosselstelle (65) verbunden sind.

2. Vorrichtung nach Anspruch 1, dadurch gekennzeichnet, daß an dem beweglichen Ventilteil (59) des Steuerdruckregelventiles (57) eine von Betriebskenngrößen der Brennkraftmaschine abhängige Korrekturkraft (67, 80) in Schließrichtung des Steuerdruckregelventils (57) angreifen kann.

3. Vorrichtung nach Anspruch 2, dadurch gekennzeichnet, daß als bewegliches Ventilteil des Steuerdruckregelventiles (57) eine Membran (59) dient.

4. Vorrichtung nach Anspruch 3, dadurch gekennzeichnet, daß der Membran (59) des Steuerdruckregelventils (57) abgewandt, die Hochdruckkammer (60) durch eine nachgiebige Wand (69) von einer Unterdruckkammer (70) getrennt wird, in der eine an der nachgiebigen Wand (69) angreifende Druckfeder (71) angeordnet und die mit dem Saugrohr (7) stromabwärts der Drosselklappe (6) verbunden ist, wobei die nachgiebige Wand (69) oberhalb eines vorbestimmten Saugrohrdruckes stromabwärts der Drosselklappe (6) so auf die Membran (59) wirkt, daß das Steuerdruckregelventil (57) geschlossen wird.

5. Vorrichtung nach Anspruch 3, dadurch gekennzeichnet, daß stromabwärts des Steuerdruckregelventils (57) in der Unterdruckleitung (64) ein Absperrventil (74) angeordnet ist, das in Abhängigkeit von Betriebskenngrößen der Brennkraftmaschine geschlossen werden kann.

6. Vorrichtung nach Anspruch 5, dadurch gekennzeichnet, daß das Absperrventil (74) eine nachgiebige Wand (75) aufweist, die einerseits vom Saugrohrdruck (1) stromaufwärts des Luftmeßorganes (3) und andererseits vom Saugrohrdruck (7) stromabwärts der Drosselklappe (6) und eine Feder (78) beaufschlagbar ist und schließt, sobald die Differenz der Drücke beiderseits der nachgiebigen Wand (75) kleiner wird, als eine vorbestimmte Differenz.

7. Vorrichtung nach Anspruch 2, dadurch gekennzeichnet, daß als Korrekturkraft am beweglichen Ventilteil (59) des Steuerdruckregelventils (57) bei Temperaturen unterhalb der Motorbetriebstemperatur eine Bimetallfeder (80) in Schließrichtung des Steuerdruckregelventils (57) angreift.

## Claims

1. Apparatus for the blowing-in of liquid gas into the intake pipe (5) of an internal combustion engine (8) with an evaporator pressure control valve (40), which has a compliant wall (45), by which a movable valve part (42) of the evaporator pressure control valve (40) can be operated and at which there acts on the one hand the pressure of the evaporated liquid gas and on the other hand, in a space (49) connected to the atmosphere, a compression spring (54), and with a metering valve (10), which is arranged downstream of the evaporator pressure control valve (40) and the movable valve part of which, designed as metering plunger (14), opens, by being operated by an air-flow sensor (3) measuring the air throughput in the intake pipe (1, 2) upstream of a throttle valve (6), to a greater or lesser extent a metering cross-section (29) for the gaseous fuel to the blow-in line (83) leading to the intake pipe (5) and can be actuated on the one hand by the pressure of the evaporated liquid gas in the evaporator pressure control valve (40) and on the other hand by the air-flow sensor (3) and a pneumatic counter-pressure medium characterized in that the metering plunger (14) has, facing the air-flow sensor (3) a control area (22), which bounds on the one hand a control space (23) connected to a control pressure line (55), in which there acts the pressure of a control air serving as pneumatic counter-pressure medium, which pressure is regulated by a control pressure control valve (57) in the control pressure line (55), and the movable valve part (59) of the control pressure control valve (57) opens to a greater or lesser extent a valve seat (62) arranged in a control pressure chamber (56) connected to the control pressure line (55), from which valve seat a vacuum line (64) leads to the intake pipe (7) downstream of the throttle valve (6), and in that the control pressure chamber (56), in which a control spring (63) actuating the movable valve part (59) in the opening direction of the control pressure control valve (57) is arranged, separates from a high-pressure chamber (60) in connection via a high-pressure line (61) with the intake pipe (1) upstream of the air-flow sensor (3), the high-pressure line (61) and the control pressure line (55) being connected by a throttle point (65).

2. Apparatus according to Claim 1, characterized in that a corrective force (67, 80), dependent on the operating characteristics of the internal combustion engine, can act in closing direction of the control pressure control valve (57) at the movable valve part (59) of the control pressure control valve (57).

3. Apparatus according to Claim 2, characterized in that a diaphragm (59) serves as the movable valve part of the control pressure control valve (57).

4. Apparatus according to Claim 3, characterized in that, facing away from the diaphragm (59) of the control pressure control valve (57), the high-pressure chamber (60) is separated by a compliant wall (69) from a vacuum chamber (70), in which a compression spring (71), acting against the compliant wall (69), is arranged and is connected to the intake pipe (7) downstream of the throttle valve (6), the compliant wall (69) acting on the diaphragm (59) above a predetermined intake pipe pressure downstream of the throttle valve (6) in such a way that the control pressure control valve (57) is closed.

5. Apparatus according to Claim 3, characterized in that a shut-off valve (74) is arranged downstream of the control pressure control valve (57) in the vacuum line (64) and can be closed as a function of operating characteristics of the internal combustion engine.

6. Apparatus according to Claim 5, characterized in that the shut-off valve (74) has a compliant wall (75), which can be actuated on the one hand by the intake pipe pressure (1) upstream of the airflow sensor (3) and on the other hand by the intake pipe pressure (7) donwstream of the throttle valve (6) and a spring (78), and closes as soon as the difference in the pressures on either side of the compliant wall (75) becomes smaller than a predetermined difference.

7. Apparatus according to Claim 2, characterized in that, as corrective force at the movable valve part (59) of the control pressure control valve (57), a bi-metal spring (80) acts in closing direction fo the control pressure control valve (57) at temperatures below the engine operating temperature.

**Revendications**

1. Dispositif pour l'injection de gaz liquéfié dans le conduit d'aspiration (5) d'un moteur à combustion interne (8), avec une soupape de régulation de pression d'évaporation (40), qui présente une paroi flexible (45), par laquelle une partie mobile (42) de la soupape de régulation de pression d'évaporation (40) peut être déplacée, et sur laquelle agissent, d'un côté la pression du gaz liquéfié vaporisé, et de l'autre côté un ressort de compression (54) dans un espace (49) relié à l'atmosphère, et avec une soupape de mesure (10) disposée en aval de la soupape de régulation de pression de vaporisation (40), dont la partie mobile de soupape, réalisée sous forme de piston de mesure (14), manœuvrée par un organe de mesure d'air (3) mesurant la quantité d'air dans le conduit d'aspiration (1, 2) en amont d'un clapet d'étranglement (6), ouvre plus ou moins un orifice de mesure (29) pour le carburant sous forme gazeuse allant dans la conduite d'injection (83) jusqu'au conduit d'aspiration (5), et est commandée d'un côté par la pression du gaz liquéfié vaporisé dans la soupape de régulation de pression de vaporisation (40), et de l'autre côté par l'organe de mesure d'air (3) et un milieu pneumatique de contre-pression ; caractérisé en ce que le piston de mesure (14) qui, du côté de l'organe de mesure d'air (3), a une surface de commande (22) qui, d'un côté délimite un espace de commande (23) relié à une conduite de pression de commande (55), dans lequel agit la pression d'air de commande servant de milieu pneumatique de contre-pression, et réglée par une soupape de régulation de pression de commande (57) dans la conduite de pression de commande (55), et la partie mobile de soupape (59) de la soupape de régulation de pression de commande (57) ouvre plus ou moins un siège de soupape (62) disposé dans une chambre de pression de commande (56) reliée à la conduite de pression de commande (55), une conduite de dépression (64) partant dudit siège de soupape (62) mène au conduit d'aspiration (7) en aval du clapet d'étranglement (6) ; et en ce que la chambre de pression de commande (56), dans laquelle est disposé un ressort de réglage (63) commandant la pièce mobile de soupape (59) dans la direction de l'ouverture de la soupape de régulation de pression de commande (57), est séparée d'une chambre sous haute pression (60) en relation avec le conduit d'aspiration (1), en amont de l'organe de mesure d'air (3), par l'intermédiaire d'une conduite sous haute pression (61), grâce à quoi la conduite sous haute pression (61) et la conduite de pression de commande (55) sont reliées par un étranglement (65).

2. Dispositif selon la revendication 1, caractérisé en ce qu'une force de correction (67, 80), en relation avec les paramètres de fonctionnement du moteur à combustion interne, peut agir sur la partie mobile de soupape (59) de la soupape de régulation de pression de commande (57), en direction de la fermeture de la soupape de régulation de pression de commande (57).

3. Dispositif selon la revendication 2, caractérisé en ce qu'une membrane (59) sert de partie mobile de soupape à la soupape de régulation de pression de commande (57).

4. Dispositif selon la revendication 3, caractérisé en ce que la chambre sous haute pression (60), du côté opposé à la membrane (59) de la soupape de régulation de pression de commande (57), est séparée par une paroi flexible (69) d'une chambre de dépresison (70), dans laquelle est disposé un ressort de compression (71) s'appuyant sur la paroi flexible (69), et qui est reliée au conduit d'aspiration (7), en aval du clapet d'étranglement (6), grâce à quoi la paroi flexible (69), au-dessus d'une pression prédéterminée dans le conduit d'aspiration en aval du clapet d'étranglement (6), agit alors sur la membrane (59), afin de fermer la soupape de régulation de pression de commande (57).

5. Dispositif selon la revendication 3, caractérisé en ce qu'une soupape d'arrêt (74) est disposée dans la conduite de dépression (64), en aval de la soupape de régulation de pression de commande (57), ladite soupape d'arrêt (74) pouvant être fermée en fonction des paramètres de fonctionnement du moteur à combustion interne.

6. Dispositif selon la revendication 5, caractérisé en ce que la soupape d'arrêt (74) présente une paroi flexible (75) qui est commandée, d'un côté par la pression dans le conduit d'aspiration (1) en amont de l'organe de mesure d'air (3), et de l'autre côté par la pression du conduit d'aspiration (7) en aval du clapet d'étranglement (6) et par un ressort (78), et que ladite soupape d'arrêt (74) se ferme dès que la différence des pressions des deux côtés de la paroi flexible (75) devient inférieure à une valeur prédéterminée.

7. Dispositif selon la revendication 2, caractérisé en ce qu'un ressort bilame (80), en tant que force de correction, appuie sur la partie mobile de soupape (59) de la soupape de régulation de pression de commande (57), dans le sens de la fermeture de la soupape de régulation de pression de commande (57), dans le cas de températures inférieures à la température de fonctionnement du moteur.

FIG.1

0 121 807

FIG.2

FIG.3

FIG.4